# EUROPEAN PATENT APPLICATION

(11) **EP 3 699 474 A1**
(43) Date of publication of application: **26.08.2020**
(21) Application number: 19020088.1
(22) Date of filing: 25.02.2019
(51) Int. Cl.: F16L 55/165, B29C 63/34, F16L 55/18, F16L 55/30

(54) **METHOD FOR REPAIRING AND/OR REINFORCING A PIPE SEGMENT**

(71) Applicant: Composite Consultant SP., 1133 Budapest (HU)
(72) Inventor: Rosemont, Joseph Anthony, 1133 Budapest (HU)
(74) Representative: Pintz, György

(57) **Abstract**

A method of repairing and/or reinforcing a pipe segment including the steps of preparing a lining system (1) from a bladder (4), a tubular substrate (2) surrounding the bladder (4), a film (3) surrounding the tubular substrate (2); introducing the lining system (1) between two access points (19) into an external pipe (15); pumping the bladder (4) within the lining system (1) with heated air having a temperature of approximately 190-250 °C; allowing thermoplastic fibers of said lining system (1) to melt; allowing melted thermoplastic to bond carbon and aramid fibers of the lining system (1); curing the lining system (1) by blowing hot air into the bladder (4) at a temperature of 190-250 °C, at a pressure of 0.03 - 0.14 MPa for 5 to 90 minutes; and removing bladder (4) after the curing of the lining system (1). It is characterized in that it further includes the steps of curing the lining system (1) with a curing tool (10) using infrared radiation; installing a mesh (11) between the tubular substrate (2) and the film (3) when preparing the lining system (1); and melting the film (3) during curing, and thus bonding the tubular substrate (2) to the external pipe (15). Also a lining system (1) and a curing tool (10) for use in said method.

## Description

### Background of the invention

The subject of the invention is a method for repairing and/or reinforcing a pipe segment. The subject of the invention also includes a lining system and a curing tool for carrying out said method.

The condition of Europe's underground infrastructure is inadequate, as it has not improved over the last decades. Underground and underwater pipes are also aging, and thus the quality of the pipes is rapidly worsening. Some of the reasons are heavier traffic in cities and numerous reconstruction work. The buried pipes are difficult to inspect and deterioration is difficult to ascertain. Traditional methods of replacing a pipe and/or pipe sections require digging to access the pipe, removal of the old pipe, putting in new pipe, and tying new pipe into existing structures. This is cumbersome and expensive.

More recently, trenchless pipe repair technology has developed. The state of the art includes the following solutions.

One trenchless system is the Cured In Place Pipe ("CIPP"). An example of this comprises a felt tube with two or more layers that is vacuum impregnated with a polyester resin, with the last layer of felt being coated with an extruded film of polyurethane or polypropylene to encapsulate the resin during the impregnation process. In use the resin impregnated felt tube with polyester resin is inverted into an existing pipe, and the coated layer which was the outside layer now serves as a bladder and is filled with water or air. The filling bladder in turn expands the resin-impregnated tube to fit the shape of the existing pipe. Pressure is held until the tube is solidified and a new pipe is created on the inside of the old pipe. This technology typically relies on a material substrate such as felt that is essentially a sponge that acts as a carrier for the resin and aims to prevent the resin from running down to the bottom of the pipe via gravity during pipe installation. In other variations, curing is facilitated by UV light, or by an air bladder having heated air.

An improvement of the above is introduced in US patent application No. US2018003332. The application discloses a pipe system that includes a tubular substrate constructed of needle-punched fibers of carbon, aramid and thermoplastic. The tubular substrate defines a longitudinal channel running along the length. Within the channel is an air bladder that is filled with air by a blower. However, curing with air cannot be successfully used for thick liners, as this method is extremely time-consuming and ineffective. The tubular substrate is enclosed within a loose-fitting protective film that is removed after curing. This step however deprives the pipe of having enough strength. Another disadvantage of this solution is the instability of the liner. In this embodiment the liner can make undesired movements in the loosely fitting film.

US patent application No. US2016258567 describes an invention relating to a cured in place liner system and methods for internally lining an existing pipe with a cured in place liner system. The rehabilitated host pipe comprising: an existing host pipe; a sleeve positioned at an end of the pipe; and a liner lining an inside surface of the pipe and extending into the sleeve, the liner being bonded to the sleeve to form a coupling section extending out of the end of the pipe, the coupling section being configured to have a coupler mounted thereon for connecting the liner in fluid communication with another pipe.

US patent application No. US2014166185A1 discloses a liner tube for repairing existing pipes. The liner tube includes an inner layer, an outer layer disposed around the inner layer, a first intermediate layer disposed between the inner layer and the outer layer, the first intermediate layer being wrapped around the inner layer to overlap itself and define a first overlap portion in the upper portion, and a second intermediate layer disposed between the first intermediate layer and the outer layer, the second intermediate layer being wrapped around the first intermediate layer to overlap itself and define a second overlap portion in the lower portion.

Another US patent No. US5451351 presents a lining and method for in situ rehabilitation of a pipe. The lining includes a tubular shaped resin impregnated composite having a conductive layer surrounding an inflatable bladder. The method includes the steps of positioning the lining within a pipe section, inflating the bladder until the lining is in contiguous contact with the interior of the pipe and inducing an electric current through the conductive layer to resistively heat the lining and cure the impregnated resin.

Some of the above described solutions use wet resin that is very heavy, which adds to the costs of shipping, transportation to jobsite and labor.

The Canadian patent No. CA2017772 presents a tubular member having a liner adhesively affixed to an inner surface thereof. The liner comprises a porous material formed from a plurality of needle-punched unwoven fibers so as to have a pair of oppositely facing surfaces. The liner also includes a first mat of finespun woven filaments of glass defining an inner surface thereof and a second mat of finespun woven filaments of glass defining an outer surface thereof. The inner and outer surfaces of the liner, formed by the first and second mats, are generally coextensive with the porous material. The liner also includes the first mat being secured to an inwardly facing surface of the porous material and the second mat being secured to an outwardly facing surface of the porous material. The liner is adhesively impregnated so as to adhesively bond the outer surface of the liner to the inner surface of the tubular member. Further, a method of lining a tubular member by adhesively bonding a liner to the tubular member is disclosed.

From Japanese patent No. JP2017217839 is known such a method for forming tubular liner for existing tube renovation and tubular substrate. A tubular substrate having a laminate sheet, by laminating a felt sheet consisting of a polyester fiber and a reinforced fiber sheet manufactured by aligning a long fiber, wound with a tube shape, and an overlapping margin that edges of the reinforced fiber sheet overlap each other in a tube circumferential direction is used. An uncured curable resin is impregnated in the tubular substrate, inserted inside of an existing tube and diameter is expanded. At the time, the felt sheet is extended, the reinforced fiber sheet is not extended and the overlapping margin P is reduced or disappears. Then the curable rein is cured and the tubular liner matching inner surface of the existing tube is formed.

Another Japanese Patent No. JPH05162260 presents a base material for lining pipeline. This base material for lining a pipeline is constituted of a tubular base material obtained by fixing a permeation preventing film layer to the outer peripheral surface of tubular fill and the tubular felt is impregnated with a curable material. The tubular base material is inserted in the pipeline while reversed to apply lining to the pipeline. In this constitution, the end parts of the respective tubular felts are mutually connected at the midway connection part of the tubular base materials by needle punching or stitching and the end parts of the respective permeation preventing film layers are connected by the welding of an impermeable film. Further, the impermeable film and the end parts of the respective felts just under the film are connected by an adhesive or welding.

Most of the above described inventions are advantageous insofar as they don't require extensive digging. However, some of the above described CIPP systems comprise a flexible tubular substrate impregnated with an uncured resin, typically encapsulated in film. In use the resin-impregnated substrate is inserted into an existing pipe, and an internal bladder is filled with water or air, which expands the resin-impregnated tube to fit the shape of the existing pipe. Pressure is held while the resin is cured, typically via low (∼0.0345 MPa - ∼0.103 MPa) pressure ambient cure, heat and/or UV light until the tube is solidified and a new pipe is created within the old pipe. Conventional CIPP resins have a catalyst mixed into the resin which require a <82.22 °C to initiate the curing process, but the catalyst creates an exothermic reaction which drives the temperature up to approximately 93 °C-177 °C, which is undesirable.

An improved solution is when the impregnation is performed with a dry resin that has no catalyst, and therefore no exothermic reaction that drives the temperature up undesirably high. Unfortunately, curing resin in CIPP systems is fraught with pitfalls. More specifically, curing requires that the reaction occur within a fairly narrow range of conditions, in an environment that is not readily physically or visually accessible to the operator, using potentially dangerous equipment, where the risk of failure may be catastrophic, and on a system with variations from project to project. By way of example, curing a pipe system having a thermoplastic resin requires that the thermoplastic reach a threshold melting point, for example 198 °C to 205 °C, but reaching this temperature throughout the substrate is difficult in large diameter pipe systems due to loss of penetrating heat by conduction or convection. Similarly, UV penetration is difficult in large diameter pipe systems due to the thickness of the substrate. Moreover, while it is known to use IR to cure different types of resins, it is not known to cure pipes in place with IR.

Thus, there remains a need for a method and a curing tool for delivering infrared radiation (IR) to Cured In Place Pipe (CIPP) systems having IR cured resin, and a durable, reliable lining system. It is desirable that the method, the tool and the lining system are fairly easy to use, save labor and money, and yield predictable results.

### Summary of the invention

The present invention pertains to method, a curing tool and a lining system for repairing and/or reinforcing a pipe segment, more particularly, repairing and/or reinforcing a pipe segment using infrared radiation (IR) to a Cured In Place Pipe (CIPP) system.

The general method of the present invention includes the steps as follows. The entire pipe or a segment of an external pipe (host pipe) to be repaired or reinforced is identified, and access points are established upstream and downstream of the pipe segment. The lining system is prepared from a bladder, a tubular substrate surrounding the bladder, a film surrounding the tubular substrate; and the lining system is then introduced into the external pipe. The bladder is pumped with hot air, and the thermoplastic of the tubular substrate melts, carbon and aramid fibers bond, and the thermoplastic cures. The bladder is removed after curing, ends of the cured lining system are cut, and the newly reinforced portions are connected to the existing upstream and downstream external pipe. Pipe flow is then resumed. The method is characterized in that the curing of the lining system is performed with a curing tool using infrared radiation. The method further includes the steps of adding a mesh between the tubular substrate and the film when preparing the lining system; and melting the film during curing, and thus bonding the tubular substrate to the external pipe.

The curing tool of the invention is characterized in that it includes a leading segment, a tailing segment and a bi-directional joint separating the leading segment and the tailing segment; the tailing segment is located behind said leading segment; the leading segment includes a plurality of heat strips for curing resin, the heat strips are positioned on spoke arms; the tailing segment includes a plurality of wheels. In a possible embodiment, it also includes a lead, the lead is connected to the leading segment. In another possible embodiment it is further equipped with a winch, the winch is engaged with the lead. Another possible feature of the curing tool is an umbilical cord connected to the tailing segment. According to another embodiment the curing tool further includes a control unit communicatively engaged with the umbilical cord.

The lining system of the present invention generally includes a carbon composite tubular substrate defining a longitudinal channel running along the length. Within the channel is an air bladder, preferably including an air duct. Said bladder is formulated as to not melt at curing temperatures, so it is able to be removed after cure of the liner. The tubular substrate is enclosed within a protective film formulated so as to melt during curing to bond the tubular substrate to the external pipe (host pipe) creating additional strength. A mesh preferably made of Polypropylene is added between the tubular substrate and the film to prevent movement of the liner material tubular substrate so that the joints stay aligned.

The carbon composite tubular substrate includes fibers of carbon, aramid and thermoplastic which have been needle punched together. The tube can be stitched or seamed if there is very little variance of the external pipe (host pipe), however an overlap seam allows for circumferential expansion to accommodate the size and shape of the external pipe and is preferred. An outer plastic film encapsulates the tubular structure to protect it from contamination by the external pipe during installation. The formulation of the carbon material is able to be cured not only via hot air but also an infrared curing source. This is beneficial for thicker tubular substrate where hot air would take substantial time to penetrate and heat it completely.

The problem to be solved is to provide a good and durable solution for curing pipes in place. without the disadvantage of dealing with the weight of wet resin. There is a need for a simple method and a system that has long shelf life, cures at a relatively low pressure and is light in weight. Additionally, another problem to be solved is that curing with air cannot be successfully used for thick liners, thus there is a need for another method, infrared radiation.

The purpose of the invention is to eliminate the faults of known solutions and to provide an improved but simple method and system for curing pipes in place.

These and other aspects of the present inventions will become apparent to those skilled in the art after a reading of the following description of the preferred embodiment when considered with the drawings.

The presented invention has numerous advantages, including the stability of the tubular substrate because of the mesh applied between the tubular substrate and the film, and the melting of the film during curing in order to improve the strength of the external pipe. Moreover, curing with infrared makes it possible to use stabile, strong, effective thick tubular substrate. Because the lining system does not include a wet resin, the resulting product is lighter, less messy, and easier to transport.

According to the above purpose, the most general method of the solution according to the invention is described in claim 1. The individual application forms are described in the dependent claims. The curing tool according to claim 1 is described in claim 4. The lining system according to claim 1 is described in claim 9.

### Brief description of the drawings

The invention is presented in more detail by examples of implementation, using drawings.
Fig. 1 depicts an embodiment of the curing tool;
Fig. 2 depicts the curing tool in use navigating a curve;
Fig. 3 depicts a cross-section view of the external pipe and lining system;
Fig. 4 depicts the tubular substrate encapsulated in the film;
Fig. 5 depicts pulling the lining system through the pipe with a winch;
Fig. 6 depicts the curing tool in use; and
Fig. 7 depicts removal of the bladder from the repaired external pipe.

### Detailed description of the invention

The following detailed description is of the best currently contemplated modes of carrying out exemplary embodiments of the invention. The description is not to be taken in a limiting sense, but rather it illustrates the general principles of the invention, with the scope of the invention set forth in the appended claims.

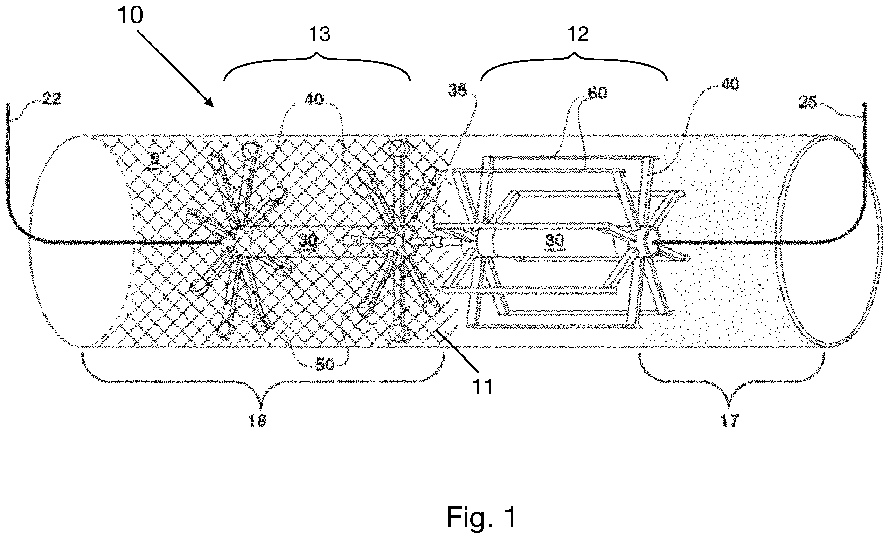

Figure 1 illustrates a curing tool 10. Broadly, the curing tool 10 of the present invention is an elongated IR emitter that is configured to travel within a CIPP system and cure IR cured resin in its path. The curing tool 10 includes heat strips 60, wheels 50, a control unit 20, generator, an umbilical cord 22, and a lead 25. The curing tool 10 is particularly well suited for curing large diameter CIPP systems having IR cured resin. As used herein, "IR cured resin" shall refer to resin that can be cured using IR, including known resins that are conventionally cured using heat and/or pressure. As used herein, "large diameter" CIPP systems shall refer to those having a diameter of approximately 3 m to approximately 6-6.5 m. The curing tool 10 generally includes cantilevered leading segment 12 separated from tailing segment 13 by bidirectional pivoting joint 35. Leading segment 12, so named because it leads tailing segment 13 when pulled through external pipe 15, includes a plurality of spoke arms 40 radiating from spine 30. One heat strip 60 spans distal end of at least two spoke arms 40, with those spoke arms 40 originating from different wheels 50. Heat strips 60 are substantially perpendicular to spine 30, and a plurality of heat strips 60 are arranged to form a circular array of IR emitters that are outwardly directed. In this manner IR waves are directed around the inner surface of lining system 1, more specifically of bladder 4 as curing tool 10 travels there through. Length of spoke arms 40 is preferably adjustable so heat strips 60 can be located as close to the inner surface of lining system 1 as possible without damaging or overheating. In a preferred embodiment, heat strips 60 deliver approximately 475,000 watts of power, which is equivalent to approximately 199 °C - 205 °C. Heat strips 60 are commercially available and thus known for a skilled person in the art. In one embodiment, heat strips 60 spin, thereby exposing all material to IR lights. Tailing segment 13 of curing tool 10 includes spine 30 with plurality of spoke arms 40 radiating therefrom. Spoke arms 40 of tailing segment 13 terminate in wheels 50. Spoke arms 40 are adjustable in length. Wheels 50 are in physical contact with inner surface of lining system 1, more specifically bladder 4, but in normal operation heat strips 60 do not touch inner surface. It is important that uncured resin 17 is not in contact with wheels 50, sleds, or other sources of friction. This is why the leading segment 12 is cantilevered. The curing tool 10 is pulled through the channel 5 via lead 25, with umbilical cord 22 trailing behind. Umbilical cord 22 is preferably approximately 240 m to 305 m. In this manner uncured resin 17 is transformed into cured resin 18 upon passage of curing tool 10. An example of a commercially available IR cured resin is a polypropylene thermoplastic such as Hyperform HPN-68L having approximately 153 to 233 °C melt and cure points at a pressure of approximately 0.0345 - 0.1379 MPa (5 to 20 psi). Mesh 11, described in details later, is also shown in this figure.

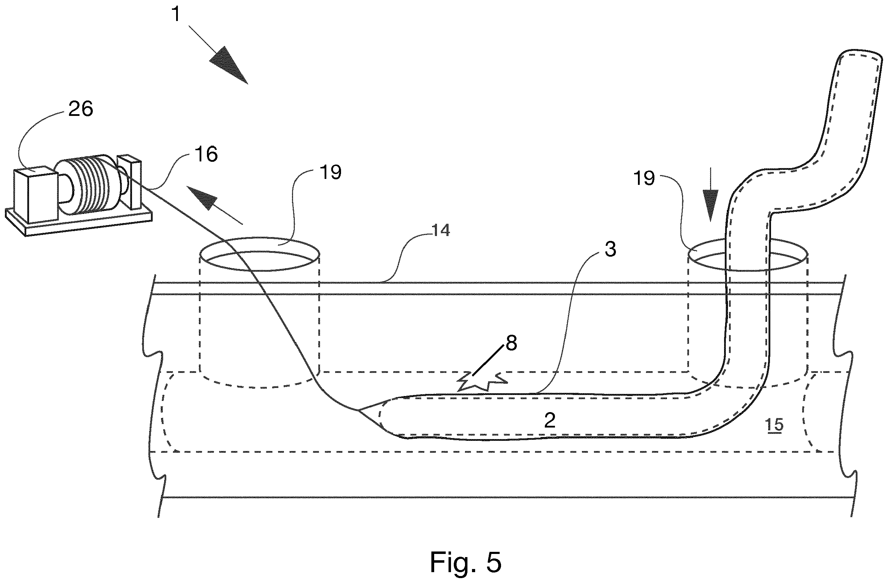

In use, curing tool 10 with uncured resin 17 is introduced into external pipe 15 in need of repair or reinforcement. Curing tool 10 is introduced into bladder 4 (not specifically shown in this drawing) of lining system 1, with lead 25 protruding from one access point 19 (access points are shown in Figures 5-7), and umbilical cord 22 protruding from opposite access point 19. Lining system 1 is sealed with curing tool 10 within bladder 4, and bladder 4 is fully inflated. Lead 25 is connected to winch 26, and umbilical cord 22 is connected to control unit 20 and generator. Heat strips 60 are activated, and winch 26 pulls lead 25 from one end of lining system 1 to the other, with heat strips 60 converting uncured resin 17 into cured resin 18. Curing tool 10 preferably travels at a speed of approximately 3.00 - 30.50 cm/min, with the speed varying according to parameters such as specific properties of resin, thickness of resin, and/or distance of heat strips 60 from resin. When curing is complete heat strips 60 are turned off, the lining system 1 is allowed to cool, pressure is relieved, end caps are removed, bladder 4 is removed, ends are joined with external pipe 15, and CCTV camera is inserted inside the pipe for inspection.

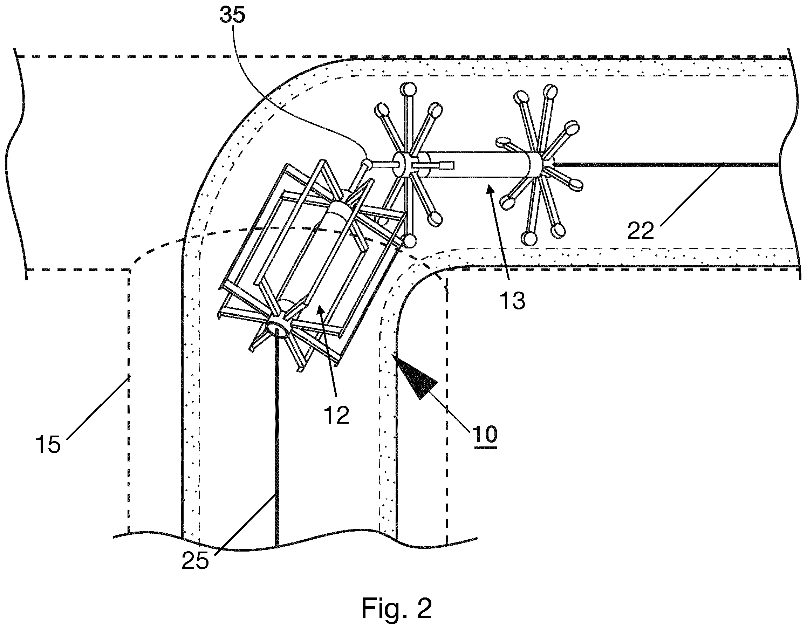

Figure 2 depicts the curing tool 10 navigating a curve in external pipe 15. It is important to note that the cantilevered orientation of leading segment 12 is possible because joint 35 pivots left and right, but not in other axes. The leading segment 12 is pulled by lead 25, and a tailing segment 13 follows the leading segment 12. An umbilical cord 22 is connected to the tailing segment 13.

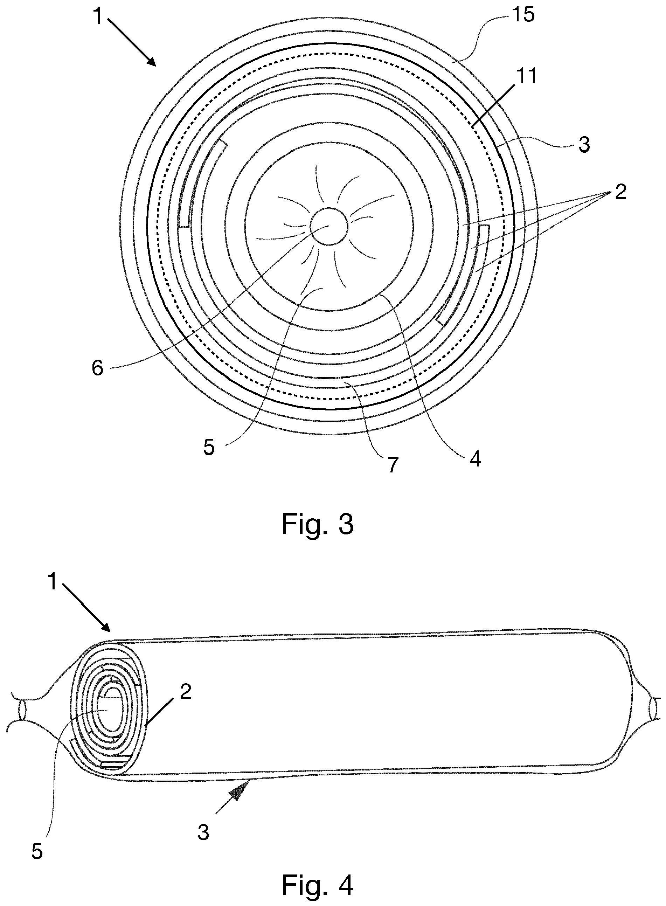

Fig. 3 and 4 introduce the lining system 1. As Fig. 3 is a cross-section view, it helps study the parts of the lining system 1, the different parts surrounding each other. Tubular substrate 2 defines channel 5, which receives removable bladder 4 including air duct 6. Bladder 4 is preferably constructed of an airtight, temperature and pressure resistant material. The bladder 4 is equal to the same length of the tubular substrate 2 in which both are banded tightly to ensure that when compressed air is supplied to the end cap, the bladder 4 will inflate causing the tubular substrate 2 to expand to fit the external pipe 15. Bladder 4 preferably includes internally located air duct 6 which comprises a plurality of air outlets that facilitate uniform distribution of hot air along length of lining system 1 during inflation, heating and pressurizing. Tubular substrate 2, including internal bladder 4 and air duct 6 are completely encased in film 3. The film 3, that is an external calibration foil tube, protects the tubular substrate 2 from external pipe 15 contamination by providing a physical barrier. The circumference of the film 3 is slightly greater than the circumference of the tubular substrate 2 that it is encasing, thereby allowing expansion of the tubular substrate 2 during the installation process. The circumference difference between the film 3 and tubular substrate 2 will depend on the specifications and external pipe 15 size of a particular application. Film 3 is preferably constructed of an airtight, temperature and pressure resistant material.

As shown in Fig. 3, a mesh 11, preferably made of Polypropylene is installed between the tubular substrate 2 and the film 3. This material is minimal thickness and will melt into the tubular substrate 2 and the film 3 during the curing process. It is made by welding a seam the proper diameter by means of heat welding so that the mesh 11 maintains its diameter. Because of the holes in the mesh 11, it will grab the tubular substrate 2 and create a friction bond. This prevents movement of the joints during shipping and installation so that the proper overlap is achieved. This also allows using thicker liners that would not be able to be achieved without holding the overlaps in place. If only thinner tubular substrates 2 were able to be installed and yet a thicker finished tubular substrate 2 was required, the only way it could be done before is if multiple substrates were installed over each other. This is also part of the advantage of the IR curing, as it is able to cure thick tubular substrates 2.

The tubular substrate 2 is prepared as follows. Fibers of carbon, aramid and thermoplastic are needle punched together to form flat substrate. The carbon fibers are preferably recycled or reclaimed fibers, having a length of approximately 25.4 mm to 101.6 mm, and thickness of approximately 0.31 mm to 1 mm. The aramid fibers preferably have a length of approximately 25.4 mm to 101.6 mm, and thickness of approximately 0.31 mm to 1 mm. The thermoplastic fibers preferably have a length of approximately 6 mm to 2500 mm, and thickness of approximately 0.31 mm to 1 mm. The proportion of carbon fibers in the flat substrate is approximately 10 to 60% by weight. The proportion of aramid fibers in the flat substrate is approximately 0 to 15% by weight. The preferred proportion of fibers in the flat substrate is approximately 40% carbon, 0% aramid, and 60% thermoplastic, by weight. The thermoplastic of the present invention is polypropylene having approximately 154 to 205 °C melt and cure points at a pressure of approximately 0.0345 - 0.1379 MPa (5 to 20 psi). Fibers are needle punched together by conventional methods in a directional format. However, other combinations are also suitable. Flat substrate can be produced in a variety of thicknesses, typically approximately 1.5-9 mm, as appropriate for the specific application. Flat substrate is preferably spooled for subsequent use. To form tubular substrate 2, flat substrate is unwound from the spool typically using a mandrel or airshaft. Longitudinal edges of flat substrate are brought together to form a tube with overlapping edges. In this figure, tubular substrate 2 is formed of two flat substrates, creating overlapping segment 7. It is desirable that longitudinal edges overlap by at least 5 cm after it has expanded to the external pipe 15. Typically, a 50.8 mm (two inch) overlap after expansion requires an overlap of at least 101.6 mm (4 inches) during manufacturing, although this would vary according to the specific application. The number of layers of flat substrate depends on the end use application, but 1-12 layers are preferred. It should be noted that the flat substrates are independent of each other and are preferably not permanently or semi-permanently attached to each other through adhesives, stitching, mechanical or frictional cinching devices, or the like. This allows the lining system 1 to slide and expand to accommodate the size and shape of the external pipe 15.

Fig. 5 depicts external pipe 15 having compromised portion 8 and the positioning of the lining system 1 within external pipe 15. External pipe 15 is beneath ground 14, and accessible upstream and downstream of compromised portion 8 by access points 19. In this depiction access points 19 are manholes, although it should be understood that a variety of access points 19 could be used with the present invention, including pre-existing accesses and accesses which are created for pipe repair and reinforcement. In a preferred embodiment, at least one string 16 is inserted into external pipe 15 during production for later attachment to bladder 4. By way of example, string 16 may be attached to bladder 4 for positioning uninflated bladder 4 within external pipe 15 prior to inflation, and/or prior to removal of deflated bladder 4 following curing. String 16 may be positioned at, and connected to, far end of bladder 4 in order to facilitate inverted removal of bladder 4, where bladder 4 turns inside out and travels over itself to come out. String 16 is fed into a first access point 19 and out second access point 19, where string 16 is attached to end of bladder 4, then pulled by winch 26 from second access point 19 towards first access point 19. The method then continues as follows. Superheated hot air is blown from blower into bladder 4, thereby expanding bladder 4 to fit size and shape of external pipe 15. Air duct 6 within bladder 4 defines a plurality of perforations to evenly distribute air along entire length of bladder 4. Expanding bladder 4 causes tubular substrate 2 surrounding the bladder 4 to likewise expand to generally fit the size and shape of the external pipe 15. This circumferential expansion is possible because overlapping segments are able to move relative to each other. Expanding bladder 4 and tubular substrate 2 "fill out" surrounding film 3, but film 3 is sized to accommodate expansion and remains intact. After that, curing takes place. Curing is performed by blowing hot air and by infrared radiation. Superheated hot air is blown at a temperature, pressure and duration adequate for curing. Although these parameters will vary a bit depending on application, specific composition of fibers in flat substrate, and other factors, it is preferred that the air is approximately 190-250 °C, at a pressure of approximately 0.03 - 0.14 MPa (5-20 psi), for approximately 5 to 90 minutes. The temperature and pressure can be "held" at various levels as desired.

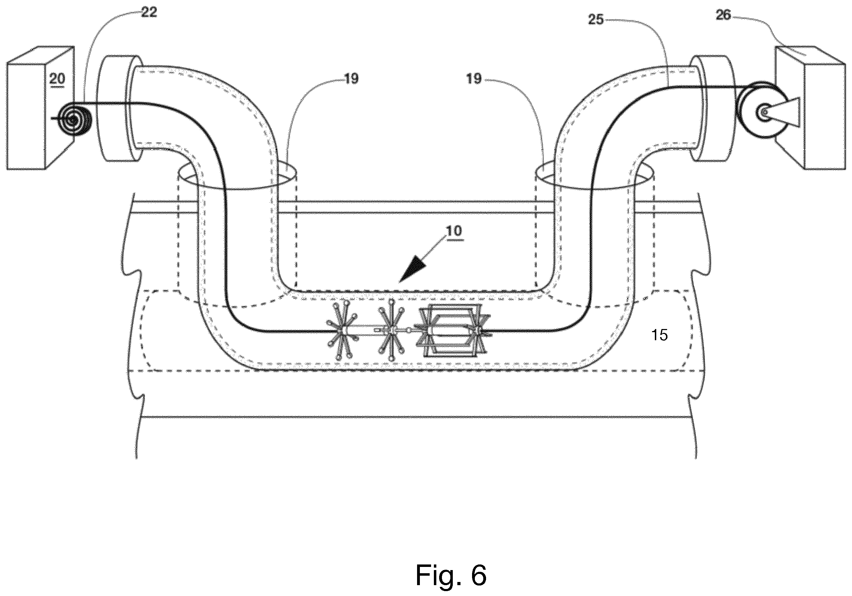

Figure 6 depicts the curing tool 10 in use. Lining system 1 is positioned within external pipe 15, with curing tool 10 traveling within external pipe 15 and curing resin along its path. Motion of system through the channel 5 is driven by winch 26 pulling lead 25. System is powered by a generator (not shown) and controlled by control unit 20, via umbilical cord 22. Although not shown, control unit 20 may be communicatively connected to winch 26 to control speed of the curing tool 10.

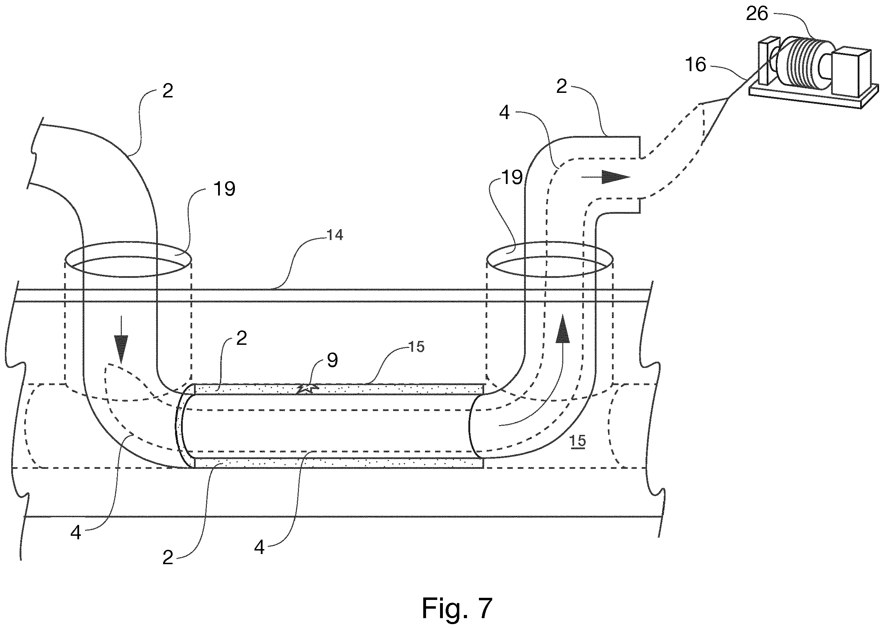

Figure 7 illustrates the last steps of the method. After curing and cooling, the bladder 4 is allowed to deflate, and then pulled out through access point 19 by winch 26. Note that cured tubular substrate 2, mesh 11 and film 3 (mesh and film not shown in this figure) remain within pipe 15, melted to the external pipe 15 to create additional strength. Air duct 6 may be manually removed from bladder 4 prior to removing bladder 4, or they may be removed together. String 16 may be used to assist removal of bladder 4. After removal of bladder 4, ends are flush cut and cut ends are integrated with external pipe 15 structure through patching, connectors, or other methods. The repaired portion 9 of external pipe 15 beneath the ground 14 is also shown in this figure.

It should be understood that the above relates to exemplary embodiments of the invention and that modifications may be made without departing from the spirit and scope of the invention as set forth in the following claims. By way of example, the wheels could be sleds, the shape of the IR lamps could be curved or slanted instead of straight, the IR light section may or may not spin, and the lights may not be emitters, but rather custom modules for this specific application. Terms such as "substantially" and the like shall mean within reasonable bounds when considering limitations such as machines, materials, manufacturing methods, and people. By way of example, a "substantially smooth" surface means there are no intentional bumps or irregularities. All ranges set forth herein include the endpoints as well as all increments there between, even if not specifically stated. By way of example 1 to 2 mm includes 1 mm, 1.000001 mm and so forth. Finally, unless otherwise stated or contrary to common sense, "approximate" and the like shall mean +/-10%.

In addition to the above examples, the invention may be implemented within the scope of protection in other forms and with other manufacturing procedures.

### Reference numbers:

- 1: lining system
- 2: tubular substrate
- 3: film
- 4: bladder
- 5: channel
- 6: air duct
- 7: overlapping segment
- 8: compromised portion
- 9: repaired portion
- 10: curing tool
- 12: leading segment
- 13: tailing segment
- 14: ground
- 15: external pipe
- 16: string
- 17: uncured resin
- 18: cured resin
- 19: access point
- 20: control unit
- 22: umbilical cord
- 25: lead
- 26: winch
- 30: spine
- 35: joint
- 40: spoke arm
- 50: wheel
- 60: heat strip

## Claims

1. A method of repairing and/or reinforcing a pipe segment including the steps of preparing a lining system (1) from a bladder (4), a tubular substrate (2) surrounding the bladder (4), a film (3) surrounding the tubular substrate (2);
introducing the lining system (1) between two access points (19) into an external pipe (15); pumping the bladder (4) within the lining system (1) with heated air having a temperature of approximately 190-250 °C;
allowing thermoplastic fibers of said lining system (1) to melt;
allowing melted thermoplastic to bond carbon and aramid fibers of the lining system (1); curing the lining system (1) by blowing hot air into the bladder (4) at a temperature of 190-250 °C, at a pressure of 0.03 - 0.14 MPa for 5 to 90 minutes;
and removing bladder (4) after the curing of the lining system (1),
**characterized in that**
it further includes the steps of
curing the lining system (1) with a curing tool (10) using infrared radiation;
installing a mesh (11) between the tubular substrate (2) and the film (3) when preparing the lining system (1); and
melting the film (3) during curing, and thus bonding the tubular substrate (2) to the external pipe (15).

2. The method according to claim 1, **characterized in that**
when curing using lining system (1) infrared radiation,
firstly the curing tool (10) is introduced into the bladder (4), with a lead (25) protruding from one of the access points (19), and umbilical cord (22) protruding from the other access point (19);
where the lead (25) is connected to winch (26), and the umbilical cord (22) is connected to a control unit (20);
then heat strips (60) of the curing tool (10) are turned on, and the winch (26) moves the curing tool (10) via the lead (25) from one end of the bladder (4) to the other;
during the movement of the curing tool (10) the heat strips (60) convert uncured resin (17) into cured resin (18) using infrared radiation;
then the heat strips (60) are turned off; and the curing tool (10) is removed from the bladder (4) by pulling the lead (25) by the winch (26).

3. The method according to claim 2, **characterized in that**
the speed of the movement of the curing tool (10) is in the range of 3.00 - 30.50 cm/min.

4. A curing tool for repairing and/or reinforcing a pipe segment according to claim 1,
**characterized in that** it includes a leading segment (12), a tailing segment (13) and a bi-directional joint (35) separating the leading segment (12) and the tailing segment (13);
the tailing segment (13) is located behind said leading segment (12);
the leading segment (12) includes a plurality of heat strips (60) for curing resin, the heat strips (60) are positioned on spoke arms (40);
the tailing segment (13) includes a plurality of wheels (50).

5. The curing tool according to claim 4, **characterized in that** it further includes a lead (25), the lead (25) is connected to the leading segment (12).

6. The curing tool according to claim 5, **characterized in that** it further includes a winch (26), the winch (26) is engaged with the lead (25).

7. The curing tool according to any of the claims 4-6, **characterized in that** it further includes an umbilical cord (22) connected to the tailing segment (13).

8. The curing tool according to claim 7, **characterized in that** it further includes a control unit (20) communicatively engaged with the umbilical cord (22).

9. A lining system for repairing and/or reinforcing a pipe segment according to claim 1, including
a needle punched tubular substrate (2) having carbon, aramid and thermoplastic fibers,
a removable bladder (4) surrounded by the tubular substrate (2),
a channel (5) formed by the tubular substrate (2),
a removable air duct (6) within the channel (5),
a film (3) surrounding the tubular substrate (2),
the tubular substrate (2) is constructed of multiple overlapping segments (7),
**characterized in that** it further includes
a mesh (11), the mesh (11) is placed between the tubular substrate (2) and the film (3).
